# DEMANDE DE BREVET EUROPEEN

(11) **EP 1 065 267 A1**
(43) Date de publication de la demande: **03.01.2001**
(21) Numéro de dépôt: 00401822.2
(22) Date de dépôt: 26.06.2000
(51) Int. Cl.: C12G 1/04

(54) **Formulation de produits oenologiques, leur préparation et leurs applications.**

(30) Priorité: 24.06.1999 FR 9908104
(71) Demandeur: Institut Oenologique des Vins de Bourgogne, 71640 Mellecey (FR)
(72) Inventeur: Petitjean, Eric, 51200 Epernay (FR); Remy, Jean-Piere, 51700 Cerseuil (FR)
(74) Mandataire: Peaucelle, Chantal

(57) **Abrégé**

L'invention vise des formulations de produits oenologiques, se présentant sous forme de granulés et comportant, en mélange avec un produit oenologique, un polymère insoluble dans le vin, oenologiquement acceptable, capable de se désagréger en milieu liquide. Application notamment au sulfitage.

## Description

L'invention a pour objet des formulations de produits oenologiques, leur préparation et leurs applications.

Lors de son élaboration, divers produits oenologiques sont incorporés au vin, par exemple aux fins de sulfitage ou de clarification.

Il est alors important que ces produits diffusent lentement, et se dispersent de manière homogène dans le vin.

A cet effet, on a proposé d'apporter les produits oenologiques,par exemple du métabisulfite générateur de SO_{2,} sous forme de comprimés effervescents. L'expérience a cependant montré que ces comprimés descendent très rapidement dans la cuve et que la majorité du SO₂ libéré, malgré l'effet effervescent se concentre au fond de la cuve.

Pour résoudre ce problème, les inventeurs ont recherché des formulations hydrodispersibles. Ils ont ainsi constaté qu'en utilisant certains polymères en mélange avec les produits oenologiques, et en formulant le mélange dans certaines conditions, il était possible de libérer ces produits progressivement et de manière homogène.

L'invention vise donc à fournir de nouvelles formulations de produits oenologiques.

Elle vise également leur préparation ainsi que leurs applications notamment en oenologie.

Les formulations de l'invention sont caractérisées en ce qu'elles se présentent sous forme de granulés comportant, en mélange avec ledit produit oenologique, un polymère insoluble dans le vin, oenologiquement acceptable, capable de se désagréger en milieu liquide.

De manière avantageuse, de tels polymères sont capables de faire éclater progressivement les granulés tout au long de leur descente dans le liquide, ce qui permet d'obtenir une répartition homogène du produit oenologique dans celui-ci.

Dans un mode de réalisation préféré, ledit polymère est de la polyvinylpolypyrrolidone ou PVPP en abrégé.

Des formulations particulièrement appropriées pour le sulfitage comprennent alors en mélange avec la PVPP, un dérivé sulfitique. Il s'agit de manière générale de métabisulfite de potassium.

Le dérivé sulfitique et la PVPP sont de préférence présents dans un rapport de 60 à 40 et en particulier de 90 à 10.

La densité des granulés ou bâtonnets est avantageusement légèrement supérieure à celle du liquide à traiter, ce qui évite une chute brutale de la formulation au fond de la cuve.

Pour obtenir ces granulés, on a avantageusement recours à une technique de granulation par voie humide comprenant :
- le mélange du produit oenologique, de polymère et d'un solvant organique volatil, oenologiquement acceptable, de manière à former un mélange extrudable,
- l'extrusion de ce mélange au travers d'une grille dont le diamètre des trous est adapté à la dimension et la forme recherchées pour les granulés,
- le séchage des granulés de manière à évaporer le solvant organique, suivi de leur conditionnement.

Dans l'étape de mélange, on utilise avantageusement le produit oenologique, le polymère et le solvant organique dans un rapport, respectivement, de 45/30/25 notamment de 70/8/22.

Comme solvant volatil, on citera notamment l'éthanol.

On notera que la granulation des matières premières s'effectuant par voie humide, il n'est pas nécessaire, contrairement aux techniques de compactage par compression en voie sèche, d'ajouter au mélange des lubrifiants comme le PEG ou le benzoate de potassium qui ne sont pas conformes au Codex oenologique.

L'invention fournit de manière générale des moyens permettant une répartition plus homogène des produits oenologiques dans le volume de la cuve, notamment du SO₂. De plus, on notera que dans le cas de l'utilisation de PVPP, son caractère hydrophobe exerce un effet protecteur contre la perte d'efficacité des produits oenologiques résultat d'un éventuel contact avec l'air ambiant.

D'autres caractéristiques et avantages de l'invention sont donnés dans les exemples qui suivent :

### Exemple 1: Préparation de granules hydrodispersibles de métabisulfite de potassium

Dans un mélangeur planétaire de type PHEBUS, on mélange:
- 7 kg de métabisulfite de potassium,
- 0,8 kg de polyvinylpolypyrrolidone micropulvérisée telle que celle commercialisée sous la marque Polyclar®, et
- 2,2 kg d'éthanol.
ce mélange est ensuite extrudé sur un extrudeur de type LACORPO H10 équipé d'une grille perforée d'orifices de 7 mm de diamètre. L'extrudat résultant de cette opération est cisaillé en bâtonnets à la sortie de la grille par un dispositif tranchant monté sur l'axe de l'extrudeur.

Ces bâtonnets, dont la longueur est comprise entre 10 et 20 mm environ, sont ensuite séchés dans une étuve balayée par un courant d'air préalablement déshumidifié par un appareil de type MUNTERS de type MH240. L'alcool évaporé est condensé en sortie d'étuve pour être réemployé ultérieurement. Les granulés sont ensuite conditionnés à l'abri de l'humidité ambiante.

### Exemple 2: Utilisation de granulés hydrodispersibles de métabisulfite de potassium pour le sulfitage de marcs de vendange

Les granulés utilisés pour le sulfitage des marcs sont conditionnés en vrac dans un sac à double compartiment, le premier contenant les granulés destinés au sulfitage de la cuvée, le deuxième ceux destinés au sulfitage de la taille.

A raison de 6g de SO₂ /hl de moût, la dose de granulés nécessaire au sulfitage de la cuvée est de 260 g. Une première moitié sera répartie directement dans le belon avant pressurage, l'autre moitié sera dispersée à la surface des 10 premiers hl de moûts écoulés dans le belon.

A raison de 6 g de SO₂ par hl de moût, la dose de granulés nécessaire pour la taille est de 90 g. Ceux-ci sont répartis directement dans le belon avant le pressurage de la taille.

## Revendications

1. Formulations de produits oenologiques, caractérisées en ce qu'elles se présentent sous forme de granulés comportant, en mélange avec un produit oenologique, un polymère insoluble dans le vin, oenologiquement acceptable, capable de se désagréger en milieu liquide.

2. Formulations selon la revendication 1 caractérisées en ce que ledit polymère est de la polyvinylpolypyrrolidone.

3. Formulations selon la revendication 1 ou 2, caractérisées en ce que ledit produit oenologique est un dérivé sulfitique.

4. Formulations selon la revendication 3, caractérisées en ce que le dérivé sulfitique est un métabisulfite de potassium.

5. Formulations selon la revendication 3 ou 4, caractérisées en ce que ledit dérivé sulfitique et la polyvinylpyrrolidone sont présents dans un rapport de 60 à 40 notamment de 90 à 10.

6. Formulations selon l'une quelconque des revendications 1 à 5, caractérisées par une densité légèrement supérieure à celle du liquide à traiter.

7. Procédé d'obtention d'une formulation selon l'une quelconque des revendications 1 à 6, caractérisé en ce qu'il comprend :
- le mélange du produit oenologique, de polymère et d'un solvant organique volatil, oenologiquement acceptable de manière à former un mélange extrudable,
- l'extrusion de ce mélange au travers d'une grille dont le diamètre des trous est adapté à la dimension et à la forme recherchées pour les granulés,
- le séchage des granulés, suivi de leur conditionnement.

8. Application des formulations selon l'une quelconque des revendications 1 à 6, en tant que produits oenologiques, en particulier pour le sulfitage des marcs de vendange.
